**Europäisches Patentamt**

**European Patent Office**

**Office européen des brevets**

(11) Veröffentlichungsnummer: **0 123 697
B1**

(12) **EUROPÄISCHE PATENTSCHRIFT**

(45) Veröffentlichungstag der Patentschrift: **27.06.90**

(51) Int. Cl.⁵: **B 29 C 33/42,** B 29 C 43/36

(21) Anmeldenummer: **83103547.2**

(22) Anmeldetag: **13.04.83**

(54) **Presse zur Herstellung von Profilkörpern.**

(43) Veröffentlichungstag der Anmeldung:
**07.11.84 Patentblatt 84/45**

(45) Bekanntmachung des Hinweises auf die
Patenterteilung:
**27.06.90 Patentblatt 90/26**

(84) Benannte Vertragsstaaten:
**AT BE CH DE FR GB IT LI LU NL SE**

(56) Entgegenhaltungen:
**EP-A-0 048 211
FR-A-1 123 873
FR-A-1 423 889
FR-A-2 329 436**

(73) Patentinhaber: **Werzalit - Werke J.F. Werz KG
Gronauer Strasse 28
D-7141 Oberstenfeld (DE)**

(72) Der Erfinder haben auf ihre Nennung verzichtet

(74) Vertreter: **Bögl, Wolfgang, Dipl.-Ing.
Hölderlinstrasse 16
D-7121 Mundelsheim (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

## Beschreibung

Die Erfindung betrifft ein Verfahren zur Herstellung von aus einem nicht steigfähigen Gemisch von mit einem wärmehärtenden Bindemittel vermischten Faserstoffen gepreßten Profilkörpern, bei dem aus dem Gemisch zunächst in einer Presse ohne Wärmezufuhr ein Vorpreßling hergestellt und dieser Vorpreßling in einer anderen Presse (Heißpresse) mit Wärmezufuhr in der Weise fertiggepreßt und mit einer Deckschicht versehen wird, daß der Vorpreßling in der Heißpresse zunächst ohne die Deckschicht nahezu fertiggepreßt, danach die Presse geöffnet, die Deckschicht auf den Profilörper aufgelegt und danach die Heißpresse erneut geschlossen und der Profilkörper fertiggepreßt wird.

Dieses Verfahren ist bekannt (DE-B-25 48 729). Es ist vorgesehen, um Profilkörper, wie Außen- und Innenverkleidungsprofile für Hochbauten, Balkonverkleidungen, Tischplatten oder dgl., aus einem nicht steigfähigen Gemisch von mit einem wärmehärtenden Bindemittel vermischten Faserstoffen zu pressen.

Das nicht steigfähige Gemisch besteht meist aus lignozellulosehaltigen Faserstoffen, wie zerkleinerten und getrockneten Holzspänen, Bagassefasern u. ä., die mit einem wärmehärtenden Kunstharz, wie einem Melamin-Harnstofformaldehyd- oder Phenolformaldehydharz vermischt sind. Anstelle der zerkleinerten und getrockneten Holz- oder Bagassefasern können aber auch Fasern anderer Werkstoffe, wie Glasfasern, Steinwolle oder Asbestfasern, allein oder mehrere derselben miteinander gemischt, verwendet werden, denen entsprechende, vorzugsweise organische Bindemittel zugesetzt sind.

Die Profilkörper werden in der Regel in der Weise hergestellt, daß zunächst aus dem Gemisch durch Kaltpressen ein Vorpreßling hergestellt wird, der auf seiner Unterseite, das ist die nicht als Sichtseite verwendete Oberfläche des Profilkörpers, mit einer Deckschicht versehen sein kann. Zu diesem Zweck wird aus dem Gemisch in einer Presse ein dem fertigen Profilkörper bereits sehr ähnlicher Vorpreßling gepreßt. Obwohl bei dem Vorpressen des Profilkörpers diesem nicht die zum Aushärten des wärmehärtenden Bindemittels erforderliche Wärmemenge zugeführt worden ist, ist der Vorpreßling schon ein fester, handhabbarer Körper.

Aus dem Vorpreßling entsteht durch das Heißpressen in einer anderen Presse der fertige Profilkörper. Beim Heißpressen wird der Profilkörper in der Regel gleichzeitig mit einer Deckschicht versehen, welche meist aus wenigstens einer Schicht besteht, nämlich einer Dekorschicht, beispielsweise aus einem Gewebe, einem Furnier, einer bedruckten Papierfolie oder einer Kunststoffolie, über eine transparente Schutzschicht angeordnet sein kann. Als Schutzschicht dient meist ein sogenanntes Overlay-Papier, bestehend aus nicht gefülltem Alpha-Zellulosepapier oder Glasfaservlies, das mit einem Duroplast, meist auf Melaminbasis, getränkt ist. Die transparente Schutzschicht kann auch dadurch erzeugt werden, daß die Dekorschicht eine stärkere Harzschicht besitzt.

Die Erfindung bezieht sich insbesondere auf ein Verfahren, bei dem das Heißpressen in zwei Stufen erfolgt. Bei diesem zweistufigen Heißpressen wird der Vorpreßling beim ersten Heißpreßvorgang ohne die Deckschicht beinahe fertig gepreßt. Danach wird die Presse nochmals geöffnet, die Deckschicht(en) eingelegt und der Profilkörper beim zweiten Heißpreßvorgang fertig gepreßt und ausgehärtet.

Das bekannte Verfahren hat sich bei der Herstellung der eingangs erwähnten Profilkörper in großem Umfang bewährt. Es sind jedoch Schwierigkeiten aufgetreten, wenn die mit dem bekannten Verfahren hergestellten Profilkörper eine stark strukturierte Oberfläche oder Gestalt aufweisen. Beim zweistufigen Pressen ist es erforderlich, daß das Preßwerkzeug beim zweiten Heißpreßvorgang wieder an der gleichen Stelle auf den zu pressenden Profilkörper einwirkt wie beim ersten Heißpreßvorgang. Wenn dies nicht geschieht, dann können an dem zu pressenden Profilkörper Beschädigungen auftreten. Wenn das Preßwerkzeug beim zweiten Heißpreßvorgang an einer anderen Stelle auf den zu pressenden Profilkörper einwirkt, dann hat das seine Ursache in der beim ersten Heißpreßvorgang entstandenen Schrumpfung des Profilkörpers.

Es ist auch eine Vorrichtung bekannt (FR-A-1 423 889), mit welcher Profilkörper aus einem thermoplastischen, d.h. einem fließfähigen Werkstoff gespritzt werden können. Es ergibt sich dabei die Notwendigkeit, den fertig gespritzten Profilkörper beim Öffnen der Spritzform im oberen Spritzwerkzeugteil festzuhalten, um es nach dem Öffnen der Spritzform aus dieser auszustoßen.

Eine bei der bekannten Vorrichtung vorgeschlagene Lösung für das Festhalten des gespritzten Profilkörpers besteht darin, daß der profilkörper nach seiner Fertigstellung durch Haltestifte im oberen Spritzwerkzeugteil festgehalten wird. Diese bekannte Vorrichtung ist zur Lösung der erfindungsgemäßen Aufgabe ungeeignet, weil dadurch die dekorative Oberfläche des Profilkörpers beschädigt würde.

Die der Erfindung zugrunde liegende Aufgabe besteht darin, das eingangs beschriebene Verfahren zur Herstellung von Profilkörpern in der Weise zu gestalten, daß das Preßwerkzeug beim zweiten Heißpreßvorgang an der gleichen Stelle auf den zu pressenden Profilkörper einwirkt wie beim ersten Heißpreßvorgang.

Diese Aufgabe ist erfindungsgemäß dadurch gelöst, daß der (herzustellende) Profilkörper während beider Heißpreßvorgänge und während des Öffnens der Heißpresse in einem von der Oberfläche des Preßwerkzeugunterteils aufragenden, einstückig angeformten, kontinuierlich oder diskontinuierlich umlaufenden Vorsprung eingespannt gehalten wird.

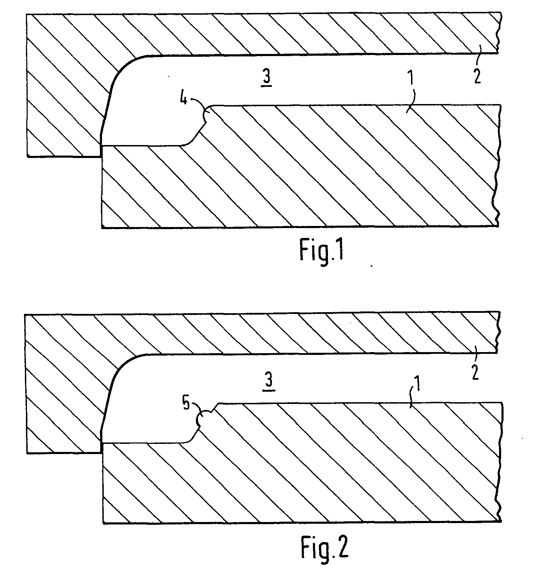

Vorteilhafte Ausgestaltungen der Vorrichtung zur Durchführung des Verfahrens sind in den Ansprüchen 2 bis 4 enthalten; sie ist nachstehend anhand der Figuren 1 und 2 erläutert. Es zeigen:

Fig. 1 den Querschnitt einer Presse mit einem Ausführungsbeispiel der Festhaltevorrichtung für den Profilkörper und

Fig. 2 die Presse gemäß Fig. 1 mit einem anderen Ausführungsbeispiel der Festhaltevorrichtung.

In den Figuren 1 und 2 sind von der gesamten Presse der Einfachkeit wegen nur das innere Preßwerkzeugteil 1 und das äußere Preßwerkzeugteil 2 gezeigt In die Preßwerkzeugteile 1 und 2 sind die Konturen des zu pressenden Profilkörpers eingearbeitet. Beim Heißpressen befindet sich der zu pressende Profilkörper also in dem Hohlraum 3 zwischen den Preßwerkzeugteilen 1 und 2, welche in der Stellung gezeigt sind, die sie bei geschlossener Presse einnehmen. Bei dem Ausführungsbeispiel gemäß Fig. 1 besteht die Festhaltevorrichtung für den Profilkörper aus dem Vorsprung 4.

Der Gestalt des Hohlraumes 3 entsprechend kann es sich bei dem zu pressenden Profilkörper beispielsweise um eine Tischplatte handeln. In diesem Fall würde sich der Vorsprung 4 am inneren Preßwerkzeugteil 1 in einer Nische auf der Unterseite des Randes der Tischplatte befinden. Der Vorsprung 4 kann — wenn das innere Preßwerkzeugteil 1 zur Herstellung einer kreisförmigen Tischplatte gedacht ist — auf dem gesamten inneren Preßwerkzeugteil 1 umlaufend vorhanden sein. Der Vorsprung 4 kann aber auch diskontinuierlich, d.h. also nur an bestimmten Stellen des inneren Preßwerkzeugteils 1 — beispielsweise in punktförmiger Anordnung — vorhanden sein.

Bei dem aus Fig. 2 ersichtlichen Ausführungsbeispiel, welches im wesentlichen dem gemäß Fig. 1 entspricht, ist der Vorsprung 5 an einer anderen Stelle des inneren Preßwerkzeugteils 1 angeordnet.

In beiden Fällen aber sorgen die Vorsprünge 4 und 5 dafür, daß der zu pressende Profilkörper am inneren Preßwerkzeugteil 1 festgehalten und am Schrumpfen gehindert wird. Der Profilkörper kann dann gewissermaßen aus dem inneren Preß werkzeugteil herausgeknöpft werden, wenn der Heißpreßvorgang beendet ist.

Die in den Figuren 1 und 2 gezeigten Ausführungsbeispiele sind dann mit Erfolg anwendbar, wenn die zu pressenden Profilkörper noch eine bestimmte Elastizität besitzen.

**Patentansprüche**

1. Verfahren zur Herstellung von aus einem nicht steigfähigen Gemisch von mit einem wärmehärtenden Bindemittel vermischten Faserstoffen gepreßten Profilkörpern, bei dem aus dem Gemisch zunächst in einer Presse ohne Wärmezufuhr ein Vorpreßling hergestellt und dieser Vorpreßling in einer anderen Presse (Heißpresse) mit Wärmezufuhr in der Weise fertiggepreßt und mit einer Deckschicht versehen wird, daß der Vorpreßling in der Heißpresse zunächst ohne die Deckschicht nahezu fertiggepreßt, danach die Presse geöffnet, die Deckschicht auf den Profilkörper aufgelegt und danach die Heißpresse erneut geschlossen und der Profilkörper fertiggepreßt wird, dadurch gekennzeichnet, daß der (herzustellende) Profilkörper während beider Heißpreßvorgänge und während des Öffnens der Heißpresse in einem von der Oberfläche des Preßwerkzeugunterteils aufragenden, einstückig angeformten, kontinuierlich oder diskontinuierlich umlaufenden Vorsprung eingespannt gehalten wird.

2. Vorrichtung zur Durchführung des Verfahrens nach Anspruch 1 mit einer Presse, welche wenigstens ein inneres Preßwerkzeugteil und ein über dieses greifendes äußeres Preßwerkzeugteil besitzt, deren Oberflächen dem zu pressenden Profilkörper entsprechend geformt sind, dadurch gekennzeichnet, daß das innere Preßwerkzeugteil (1) mit einem von seiner Oberfläche aufragenden, einstückig angeformten Vorsprung (4, 5) versehen ist.

3. Vorrichtung nach Anspruch 2, dadurch gekennzeichnet, daß sich der Vorsprung (4, 5) über das gesamte Preßwerkzeugteil (1) erstreckt.

4. Vorrichtung nach Anspruch 2, dadurch gekennzeichnet, daß der Vorsprung (4, 5) diskontinuierlich auf dem Preßwerkzeugteil (1) angeordnet ist.

**Revendications**

1. Procédé de fabrication d'éléments profilés par compression d'un mélange non-expansible de matières fibreuses mélangées avec un liant thermodurcissable, procédé selon lequel, à partir du mélange, on produit tout d'abord dans une presse, sans fourniture de chaleur, une préébauche puis on réalise la compression de finition de cette préébauche dans une autre presse (presse à chaud), avec fourniture de chaleur, et on la munit d'une couche de revêtement, et pour ce faire, on réalise tout d'abord, presque totalement la compression de finition de la préébauche, sans couche de revêtement, dans la presse à chaud, puis on ouvre la presse, on pose la couche de revêtement sur l'élément profilé et ensuite on ferme à nouveau la presse à chaud et l'on réalise par compression la finition de l'élément profilé, caractérisé en ce que, pendant les deux étapes de la compression à chaud et pendant l'ouverture de la presse à chaud, on maintient l'élément profilé (à fabriquer) bridé dans une saillie périphérique, continue ou discontinue, formée en relief sur la surface libre de la partie inférieure de l'outil de compression, d'une seule pièce avec celle-ci.

2. Dispositif pour la mise en oeuvre du procédé selon la revendication 1, comportant une presse qui possède au moins une partie intérieure d'outil de compression et une partie extérieure d'outil de compression qui saisit la première par le dessus, parties dont les surfaces libres ont une forme correspondant à celle de l'élément profilé à presser, caractérisé en ce que la partie intérieure (1) de l'outil de compression est munie d'une saillie (4, 5) en relief sur sa surface et formée d'une pièce avec elle.

3. Dispositif selon la revendication 2, caractérisé en ce que la saillie (4, 5) s'étend sur toute ladite partie (1) de l'outil de compression.

4. Dispositif selon revendication 2, caractérisé en ce que la saillie (4, 5) est disposée de façon discontinue sur ladite partie (1) de l'outil de compression.

**Claims**

1. Method of producing pressed shaped bodies of a non-swelling mixture of fibrous materials mixed with a heat-hardenable binding agent, in which from the mixture and in a power press without application of heat at first a rough pressed block is made, with this rough pressed block then being completely pressed in another power press (hot press) by application of heat and provided with a covering layer in such a way that said rough pressed block inside said hot press is at first almost completely pressed without said covering layer being applied, that thereafter said press is opened and said covering layer is deposited on said shaped body, whereupon said hat press is reclosed and the pressing of said shaped body is completed, characterized in that the shaped body (to be produced), during both of the hot-pressing stages as well as during the opening of said hot press, is clampingly retained in a continuously or discontinuously peripheral projection protruding upwardly from the surface of the lower part of the pressing tool ond moulded in one piece thereto.

2. Device for carrying out the method as claimed in claim 1 with a power press comprising at least one inner pressing tool part and one outer pressing tool part gripping over said first part, with the surfaces thereof being shaped or formed in accordance with the shaped body to be pressed, characterized in that said inner pressing tool part (1) is provided with a projection (4, 5) protruding upwardly from its surface and being moulded in one piece thereto.

3. Device as claimed in claim 2, characterized in that said projection (4, 5) extends over the entire pressing tool part (1).

4. Device as claimed in claim 2, characterized in that said projection (4, 5) is arranged discontinuously on said pressing tool part (1).

Fig.1

Fig.2

1